# EUROPEAN PATENT SPECIFICATION

(11) **EP 2 921 962 B1**
(45) Date of publication and mention of the grant of the patent: **21.06.2017**
(21) Application number: 15158507.2
(22) Date of filing: 10.03.2015
(51) Int. Cl.: G06F 11/36, G06F 11/34, G06F 12/08

(54) **OPERATION PROCESSING APPARATUS AND OPERATION PROCESSING METHOD**
OPERATIONSVERARBEITUNGSVORRICHTUNG UND OPERATIONSVERARBEITUNGSVERFAHREN
APPAREIL DE TRAITEMENT D'OPÉRATIONS ET PROCÉDÉ DE TRAITEMENT D'OPÉRATIONS

(30) Priority: 19.03.2014 JP 2014056816
(43) Date of publication of application: 23.09.2015
(73) Proprietor: FUJITSU LIMITED, Nakahara-ku, Kawasaki-shi Kanagawa 211-8588 (JP)
(72) Inventor: Kamatsuka, Shun, Kawasaki-shi Kanagawa 211-8588 (JP)
(74) Representative: Wilding, Frances Ward

(56) References cited:
- US-A1- 2003 033 480
- US-A1- 2008 065 810
- US-A1- 2012 204 182

## Description

### FIELD

The embodiments described herein are related to an operation processing apparatus and an operation processing method for coordinating program performance.

### BACKGROUND

In the tuning and optimization of a program, the benchmark test and tuning are sometimes performed to a specific region of the original program.

When the specific region of the original program is cut out to generate a so-called short program, it would be preferable to generate a program as the short program for reproducing the execution performance of the original program as accurate as possible in order to evaluate the program performance.

In a conventional technique, a method is used to determine in a source program a part which is frequently executed and cut out the determined part from the source program regardless of the execution performance of the part. In addition, another method is used to use a CPU configured to execute a program in a logical simulator and evaluate the performance of the program, and then automatically generate a scaled down program which enables performance evaluation similar to a benchmark program.

The following patent document describes conventional techniques related to the techniques described herein.

### [Patent document]

[Patent document 1] Japanese Laid-Open Patent Publication No.Hei 4-175974
[Patent document 2] Japanese Laid-Open Patent Publication No.2001-43078
[Patent document 3] Japanese Laid-Open Patent Publication No.2003-316612
[Patent document 4] US 2012/204182 A1 discloses a program generating apparatus and method that are concerned with improving the accuracy of performance evaluation of a CPU under development.
[Patent document 5] US 2003/033480 A1
[Patent document 6] US 2008/065810 A1

### SUMMARY

The above techniques cannot replicate with preferable accuracy memory access processes in the original program in a computer in which hardware cannot be directly referred to. In addition, the above techniques cannot match the cache operations in the short program with the operations in the predetermined area of the original program.

Therefore, it cannot be ensured that the short program can replicate events which occur in the original program, in which data is incidentally evicted from the cache memory according to the paging allocation performed by the CPU, that is, cache slashing occurs. Additionally, even when fine tuning is performed to the short program generated by the above techniques, each operation condition of memory access instructions is not taken into consideration. Therefore, the fine tuning to the short program cannot ensure the performance improvement of the original program.

Further, when events such as cache slashing incidentally occur in the original program, probabilistic performance estimations are used to determine whether fine tuning is effective to the events or not. This is because there might be some cases in which the effects of the fine tuning cannot be confirmed since such incidental events do not occur.

Accordingly, it is desirably to provide an operation processing apparatus which can replicate with preferable accuracy processes in the predetermined area of the program without directly referring to hardware.

According to an embodiment of one aspect, there is provided an operation processing apparatus including a processor, and memory configured to store a program to instruct the processor to perform: acquiring a program corresponding to a predetermined area of an original program; generating a sampling program, for acquiring data to replicate cache operation in the predetermined area, and generating data used in the predetermined area immediately before the program corresponding to the predetermined area is executed and information of overlapping of cache index for the data in the predetermined area in a case in which cache memory used for executing the original program operates as one-way cache memory; and executing the program corresponding to the predetermined area using the generated data immediately before the program corresponding to the predetermined area is executed and the information of the overlapping of the cache index.

Thus, the operation processing apparatus can execute the program in the predetermined area to preferably replicate a cache operation of a memory access instruction in the original program.

According to the present invention, there is proposed an operation processing apparatus according to claim 1, an operation processing method according to claim 6, and an operation processing program according to claim 11.

Dependent claims relate to preferred embodiments of the present invention.

### BRIEF DESCRIPTION OF THE DRAWINGS

FIG. 1 is a diagram schematically illustrating a configuration of an operation processing apparatus according to an embodiment; processing apparatus according to an embodiment;
FIG. 3 is a flowchart of processes performed by an operation processing apparatus according to an embodiment;
FIG. 4 is a flowchart of processes performed by an operation processing apparatus according to an embodiment;
FIG. 5A is a diagram schematically illustrating data access on cache memory of an operation processing apparatus according to an embodiment;
FIG. 5B is a diagram schematically illustrating data access on cache memory of an operation processing apparatus according to an embodiment;
FIG. 6 is a diagram schematically illustrating a circumstance of address allocation when an original program is executed by an operation processing apparatus according to an embodiment;
FIG. 7 is a diagram schematically illustrating an example of virtual address allocation when a short program is executed by an operation processing apparatus according to an embodiment;
FIG. 8A is a diagram schematically illustrating data access on cache memory of an operation processing apparatus according to an embodiment;
FIG. 8B is a diagram schematically illustrating data access on cache memory of an operation processing apparatus according to an embodiment;
FIG. 9 is a flowchart of processes performed by an operation processing apparatus according to an embodiment;
FIG. 10 is a flowchart of processes performed by an operation processing apparatus according to an embodiment;
FIG. 11 is a flowchart of processes performed by an operation processing apparatus according to an embodiment;
FIG. 12 is a flowchart of processes performed by an operation processing apparatus according to an embodiment;
FIG. 13 is a flowchart of processes performed by an operation processing apparatus according to a variation example; and
FIG. 14 is a flowchart of processes performed by an operation processing apparatus according to a variation example.

### DESCRIPTION OF EMBIDOMENTS

First, an operation processing apparatus according to an embodiment is described below, by way of example only, with reference to the drawings.

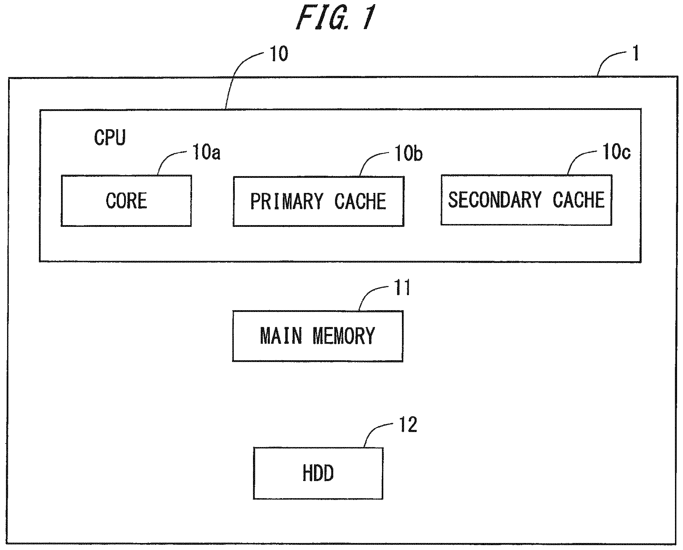

As illustrated in FIG. 1, the operation processing apparatus 1 includes a CPU 10, main memory 11 and HDD (Hard Disk Drive) 12. In addition, the CPU 10 includes a core 10a, a primary cache 10b and a secondary cache 10c. The CPU 10 executes a variety of processes as described below. The core 10a executes a variety of operations to be performed by the CPU 10. The primary cache 10b and the secondary cache 10c is cache memory in which the operations including data reading and writing and the configurations of the caches are conventionally known. The HDD 12 stores a variety of programs as described below. The CPU 10 accesses to the HDD 12 to read programs used for processes as described below. The CPU 10 accesses to the HDD to acquire programs used in processes as described below.

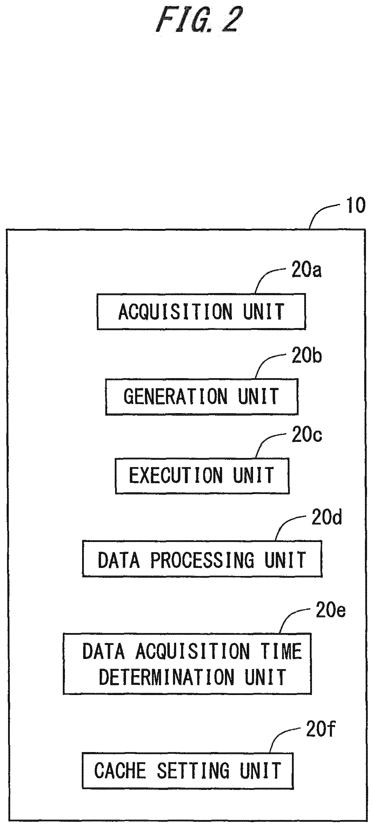

FIG. 2 illustrates a functional block diagram of the operation processing apparatus 1 according to the present embodiment. In the present embodiment, when the CPU reads programs from the HDD 12 and deploys the programs onto the main memory 11 to execute the programs, the operation processing apparatus 1 functions as an acquisition unit 20a, a generation unit 20b, an execution unit 20c, a data processing unit 20d, a data acquisition time determination unit 20e and a cache setting unit 20f.

The acquisition unit 20a acquires apart corresponding to a predetermined area of a program in order to execute a short program. The generation unit 20b generates intermediate data 2 as described later regarding data used in the program acquired by the acquisition unit 20a. The execution unit 20c executes the short program using the intermediate data 2. The data processing unit 20d performs alternate access to two data among data used in the predetermined area of the program.

The data acquisition time determination unit 20e determines whether or not the time used for the access process performed by the data processing unit20dis above a predetermined threshold. The cache setting unit 20f sets so-called multiple-way cache memory including a sector function to substantially function as so-called one-way cache memory when the multiple-way cache memory is used to execute programs. It is noted that the details of processes performed by each unit as described above are described later.

Next, processes for generating a short program for replicating cache operations performed when memory access instructions are performed in a designated area in the original program are described below. In the following descriptions, each step is abbreviated to S. First, in S101, the CPU 10 accesses to the HDD to read the original program. And the CPU 10 proceeds with the process to S200. In S200, the CPU 10 designates an area to be executed as a short program in the original program and acquires the program corresponding to the designated area to analyze the acquired program.

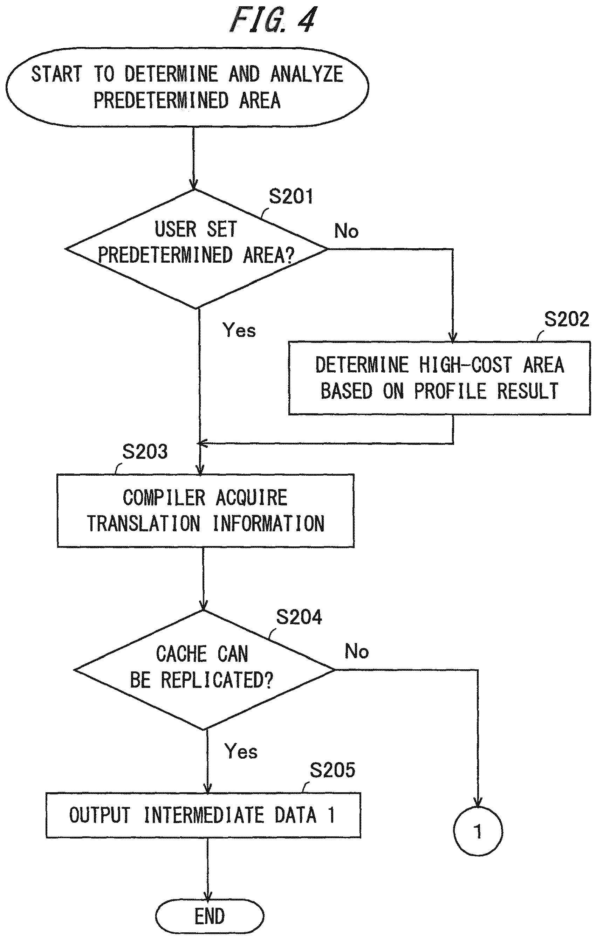

Referring to FIG. 4, the processes for determining and analyzing the designated area in the original program in S200 are described here. In S201, the CPU determines whether or not the area which is acquired from the original program has been designated by a user etc. In one example where the area to be acquired has been designated in advance, the acquisition area has been designated using an optimization directive such as a pragma directive, which provides a compiler with instructions and information for the optimization. When the CPU determines that the acquisition area has been designated in advance by a user etc. (S201: Yes), the CPU proceeds with the process to S203. In addition, when the CPU determines that the acquisition area has not been designated (S201: No), the CPU proceeds with the process to S202.

In S202, the CPU 10 executes the original program and acquires a profile result to determine a loop program in which the cache miss rate is higher than that in other programs. And the CPU 10 designates the loop program as an acquisition area. Although a program in which the cache miss rate is higher than that in other programs is designated as the acquisition area in the example described here, a so-called high cost program, which is executed more frequently than other programs, can be designated as the acquisition area. When the process in S202 is completed, the CPU proceeds with the process to S203.

In S203, the CPU 10 acquires compile information of the program designated as described above in S201 and S202. Next, the CPU 10 proceeds with the process to S204. In S204, the CPU 10 uses the compile information to determine whether or not the cache operations performed when the memory access instructions are performed in the designated area of the program can be replicated. Specifically, the CPU 10 determines that the cache operations in the memory access instructions cannot be replicated when, for example, a random number is used or there is a function call for a function which is not subject to inline expansion or a library call for a library which is not subject to inline expansion in the designated area in the program. When the CPU 10 determines that the cache operations performed when the memory access instructions are performed can be replicated (S204: Yes), the CPU 10 proceeds with the process to S205. On the other hand, when the CPU 10 determines that the cache operations performed when the memory access instructions are performed cannot be replicated (S204: No), the CPU 10 terminates the process in the flowchart according to the present embodiment.

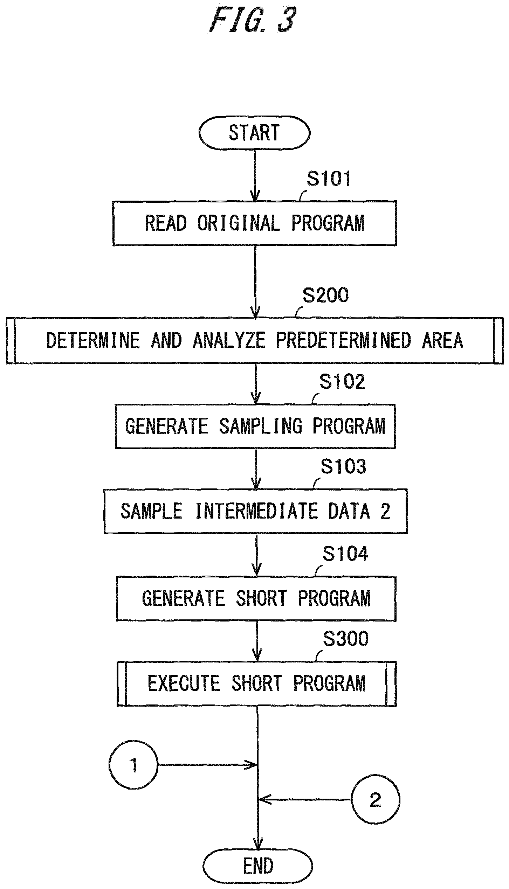

In S205, the CPU 10 samples a variety of data used for executing the designated area in the program. In the present embodiment, data sampled in S205 is referred to as intermediate data 1. The intermediate data 1 includes a list of variables, functions and instructions used in the designated area in the program, relationships between basic blocks in the designated area in the program and information used for tracking the variations of the variable data. In addition, the intermediate data 1 includes information related to the source code and optimization for code translation. When the CPU samples the intermediate data 1, the CPU 10 completes the processes as illustrated in FIG. 3 and proceeds with the process to S102.

In S102, the CPU 10 uses the sampled intermediate data 1 to generate a sampling program for acquiring data to replicate the cache operations in the designated area in the program. The sampling program acquires the overlapping state of cache indexes used for replicating the operations to the cache memory and acquires data immediately before the program corresponding to the designated area is executed regarding each piece of data used in the designated area. It is noted that the data acquired by executing the sampling program generated in S102 is referred to as intermediate data 2 in the present embodiment. In addition, the sampling program executes processes in S500 as described below for determining the overlapping of indexes for each piece of data used in the designated area. Further, the sampling program outputs the information of the overlapping of the cache indexes for each piece of data obtained by executing the determination processes as information included in the intermediate data 2.

A method of acquiring the overlapping state of cache indexes is described here. One-way cache memory or multiple-way cache memory including a cache mechanism with a sector function is used in the present embodiment. The sector function is a function with which a user can control the cache memory from an application. For example, cache memory is divided into two areas, namely sectors, and the user can select an area for caching each piece of data. For example, the user can designate that data which are not frequently used are cached into sector 0 and data which are frequently used are cached into sector 1. As a result, the data which are not frequently used do not occupy the sector 0 area. Therefore, the data which are frequently used are not evicted from the cache memory less frequently. A compiler can automatically designate the sectors for caching data or the user can designate the sectors in the source code in the cache mechanism using the sector function.

In the one-way cache memory, two pieces of data use indexes on the same cache line when the cache indexes for the two pieces of data overlap each other. Therefore, a cache miss occurs when processes for alternately accessing to the two pieces of data are performed. On the other hand, sector 1 is designated for caching the two pieces of data and the sector 1 is designated as one-way in the multiple-way cache memory including a cache mechanism with a sector function. With this configuration, a cache miss occurs since the same way for cache indexes on the same cache line is used when the cache indexes for the two pieces of data overlap each other.

In the present embodiment, the generated short program is executed to determine that cache indexes for data overlap each other when a cache miss occurs regarding the data in the short program. A specific example in which an overlapping state for cache indexes is replicated is described later.

Next, reasons for replicating the overlapping state for cache indexes are described. In a general cache mechanism, since cache lines are compared in one cache index, data with different cache indexes do not interfere with each other in the comparison processes. Therefore, when the overlapping of cache indexes regarding any two pieces of data can be replicated, processes for evicting data from the cache memory due to a cache miss can be replicated. It is noted that the cache indexes for data during the execution of the original program and the cache indexes for the data during the execution of the short program are not required to match with each other.

In addition, processes for evicting data from the cache memory due to a cache miss can be substantially replicated in multiple-way cache memory when the overlapping of the cache indexes can be replicated. This is because the operations related to a cache hit and a cache miss are not related to the determination of whether or not a tag, which is a part of a physical address, used for achieving a method of allocating multiple ways to one cache index exists.

It is noted that a short program does not replicate operations for searching a tag and for determining the correspondence relation between a cache line and a cache index in the cache memory since the operations depend on a physical address. However, the execution time for the operations is the CPU cycle time at the longest and the execution time is averaged by the time for variety of memory accesses. Therefore, the time for such processes is negligible short when the performance of the original program is determined by executing the short program in the present embodiment.

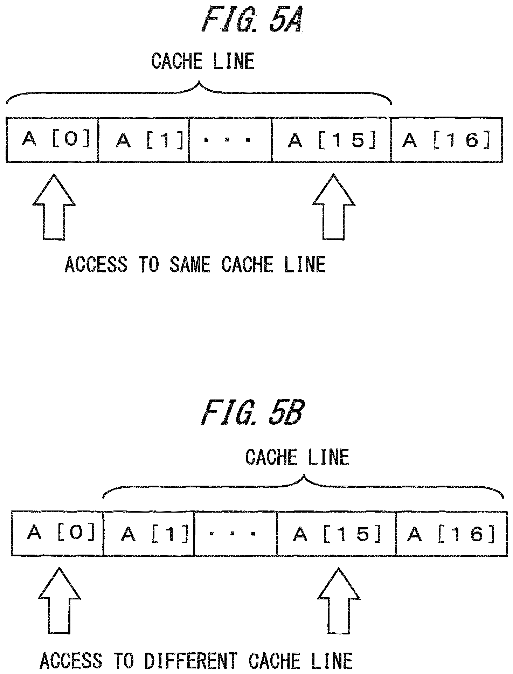

The relations between memory access instructions and data allocations on the cache lines in the main memory 11 are described. For example, physical memory including an 8-byte type array A and 128-byte cache lines is described here. Two cases are exemplified as illustrated in FIGS. 5A and 5B. One is a case (a) in which data from A[0] to A[15] are stored in one cache line. The other is a case (b) in which data from A[1] to A[16] are stored in one cache line. When memory accesses to A[0] and A[15] occur, the memory accesses are performed the same cache line in the case (a). However, the memory accesses are performed to different cache lines in the case (b). Therefore, the data access states in the cases (a) and (b) are different from each other. In the present embodiment, the data access states are matched between the original program and the short program. As a result, cache hits, cache misses and latency occurred by memory access instructions are preferably replicated for data used in the short program.

Next, the sampling program in the present embodiment records whether or not cache indexes obtained by hash functions used in the cache mechanism overlap regarding cache lines for storing data in the primary cache 10 and the secondary cache 10c. And the sampling program replicates the recorded relative overlapping of the cache indexes.

The primary cache determines cache indexes based on virtual addresses. Therefore, hash functions for calculating cache indexes are used to directly calculate the overlapping of cache indexes based on the virtual addresses in the present embodiment. Therefore, the data storing states in the cache memory are not determined in the primary cache when two pieces of data are alternately accessed in a cache line, in contrast to the calculations of cache indexes in the secondary cache 10c as described below.

On the other hand, the secondary cache determines cache indexes based on physical addresses. The cache indexes are calculated in consideration of the facts that lower bits of virtual addresses and physical addresses are identical and that a paging scheme algorithm is employed. It is noted that the paging scheme is an algorithm in which the allocations of physical memory space and logical memory space are performed by dividing the spaces into so-called pages with a predetermined size in the Operating System of the computer. In addition, the above calculations are performed in further consideration of the correspondence relations between virtual addresses and physical addresses using so-called page coloring and the characteristics of the hash functions used for calculating the cache indexes. As a result, data used for determining the overlapping of the cache indexes are specified.

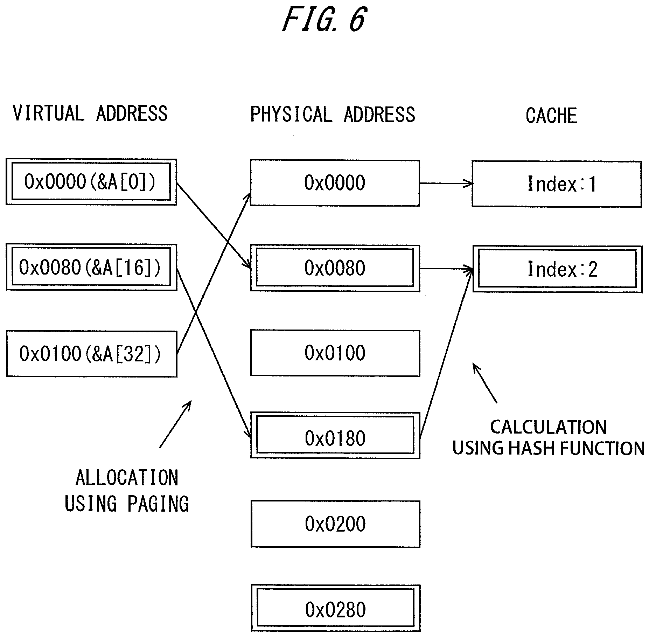

However, a method as described below is employed in the present embodiment to determine the overlapping regarding two pieces of data A and B used in the designated area in the program in the cache line for the data A and B. With this method, the overlapping of the cache indexes for the data A and B can be determined irrespective of the characteristics of the primary cache and the secondary cache as described above. This is because virtual addresses for data used in the program are converted into physical addresses as illustrated in FIG. 6. Therefore, the physical addresses can be changed through the changes of the virtual addresses when the data allocations in the program are modified.

A simple memory structure is exemplified here for concrete descriptions. Namely, it is assumed here that the size of a cache line is 128 bytes, the cache memory stores two lines each of which has the size of 256 bytes and a virtual address is allocated to a physical address every 128 bytes. It is noted that the paging scheme is not considered here. In this memory structure, an 8-byte data type array A [48] with the array length of 48 is provided and addresses are allocated as illustrated in FIG. 6 when the original program is executed. It is noted that each address referring to cache index "Index: 1" is surrounded by a rectangular drawn with a single line. And it is also noted that each address referring to cache index "Index: 2" is surrounded by a rectangular drawn with a double line. In this case, the overlapping of cache indexes for data used in the original program is illustrated in Table 1 below. It is noted that the information indicated by shading in Table 1 is not necessarily used in the present embodiment since the information is redundant.

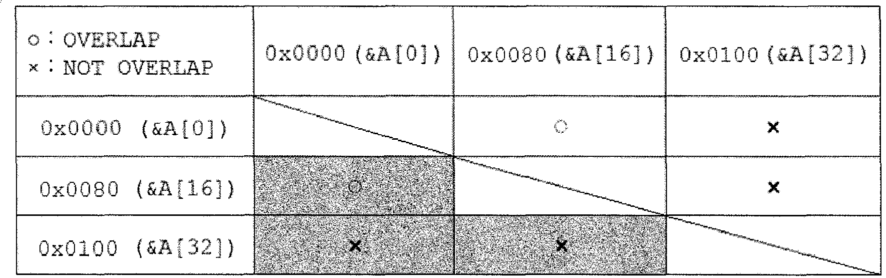

As illustrated in FIG. 6, virtual addresses "0x0000 (&A[0])" and "0x0080 (&A[16])" are converted to physical addresses "0x0080" and "0x0180", respectively. In addition, the cache index referred to by the physical addresses "0x0080" and "0x0180" is the cache index "Index: 2". Therefore, it can be assumed that the cache indexes for the virtual addresses "0x0000 (&A[0])" and "0x0080 (&A[16])" overlaps each other. On the other hand, a virtual address "0x0100 (&A[32]) " is converted to a physical address "0x0000" and the cache index referred to by the physical address "0x0000" is the cache index "Index: 1". Therefore, it is assumed that the virtual address "0x0100 (&A[32])" does not overlap the virtual addresses "0x0000 (&A[0])" and "0x0080 (&A[16])".

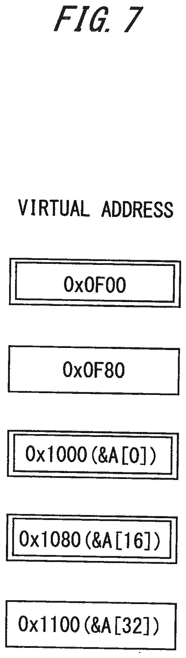

When the short program is executed in the present embodiment, virtual addresses in the main memory 11 are searched and the array of the virtual addresses is coordinated so that the overlapping of the cache indexes becomes the overlapping as illustrated in Table 1. For example, virtual addresses are coordinated as illustrated in FIG. 7. The overlapping of each piece of data on cache indexes are replicated instead of replicating physical addresses and cache indexes corresponding to the virtual addresses. However, the configuration in which the overlapping of cache indexes with respect to the physical addresses can be employed instead in the present embodiment.

Next, a method of determining the overlapping of cache indexes for two pieces of data which is each stored on a different memory region separated by a cache line size is described below. It is determined whether or not the cache indexes of the cache lines of any two pieces of data in the cache memory overlap each other based on whether or not a cache miss occurs when the two pieces of data are alternately accessed.

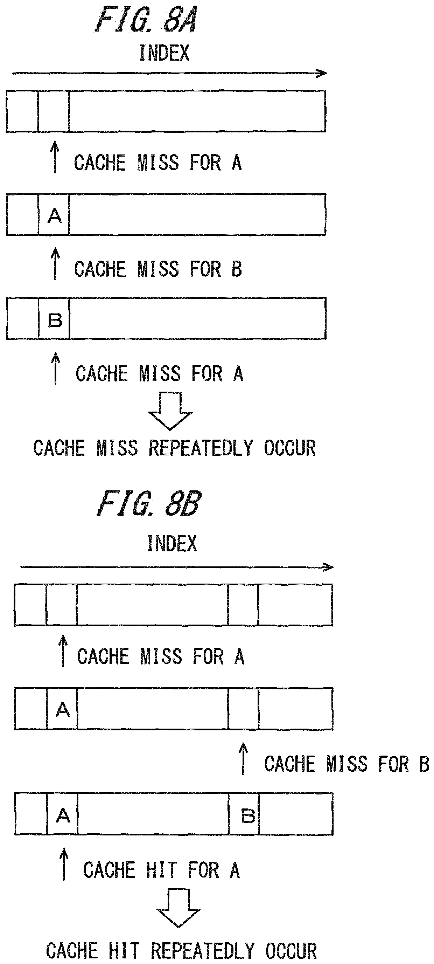

First, the same cache index means the same cache line when one-way cache memory is used. Therefore, when the cache indexes of data A and B overlap each other as illustrated in FIG. 8A and the data A and B are alternately accessed, cache misses repeatedly occur. Namely, when any two data profiles sampled in the cache memory indicate that the incidence of cache miss is high, is can be assumed that the cache indexes of the two pieces of data overlap each other. On the other hand, when the cache indexes of data A and B do not overlap, the data A and B are alternately accessed, one cache hit for each data makes subsequent access to each data become cache hit. Consequently, the time for acquiring data A and B in the case as illustrated in FIG. 8A is shorter than the time in the case as illustrated in FIG. 8B. Therefore, the overlapping of cache indexes can be determined based on the data processing time when two pieces of data are alternately accessed.

In addition, the CPU 10 determines the number of ways of cache memory in the present embodiment. For example, the CPU 10 set the number of ways of the sector 1 of cache memory to 1 when the number of ways of the cache memory is equal to or more than 2. Further, the CPU 10 designates as sector 1 sector cache to store any two pieces of data used in the short program. The CPU 10 also designates as sector 0 sector cache to store data which is not used in the short program. As a result, the cache memory can substantially be one-way cache memory since the number of ways of the sector 1 is 1. Moreover, data used in the short program is not evicted from the cache memory due to data which is not used in the short program.

It is noted that the processes for designating as sector 1 sector cache to store any two pieces of data used in the short program are an example of processes for designating as the first sector a sector to store data used in a predetermined area of a program and designating as the second sector a sector to stored data which is not used in the predetermined area of the program. The overlapping of cache indexes of data A and B is determined with the number of ways of the cache memory set to one-way in the present embodiment.

Next, the cache memory is filled with data in the sector 0 which is not related to the two pieces of data as comparison targets. As a result, the cache memory is put under a situation in which a cache miss occurs regarding the two pieces of data. When a profile regarding the processing time for alternately accessing the two pieces of data is acquired to determine that the processing time is long, which means that the occurrence of cache miss is high, it can be assumed that the cache indexes of the two pieces of data overlap each other. Therefore, the overlapping of cache indexes in a target computer can be determined regardless of the number of ways of the cache memory in the present embodiment.

Specific processes performed by the CPU 10 in the present embodiment are described below with reference to FIG. 3. The program in the predetermined area is described in the sampling program executed by the CPU 10 in S102. In addition, a function for outputting the intermediate data 2 is described immediately before the predetermined area of the sampling program. It is noted that the description of the sampling program corresponds to the description of the original program except that the function is described immediately before the predetermined area of the sampling program. Therefore, it can be assumed that the information including the overlapping on the cache line indicated by the intermediate data 2 acquired by executing the sampling program corresponds to the information indicated by the intermediate data which is output when the original program is executed. In S103, the CPU 10 executes the sampling program generated in S102 to sample the intermediate data 2. And then the CPU 10 proceeds with the process to S104.

In S104, the CPU 10 generates a short program for performing processes for replicating cache operations in the execution of memory access instructions in the original program. The short program reads the intermediate data 2 on execution. In addition, the short program replicates the overlapping of cache indexes and acquires data immediately before the program in the predetermined area is executed from the cache memory. A cache hit, a cache miss and latency in the operations of the cache can be replicated by replicating the overlapping of cache indexes in the short program in the present embodiment. When the CPU 10 generates the short program, the CPU 10 proceeds with the process to S300.

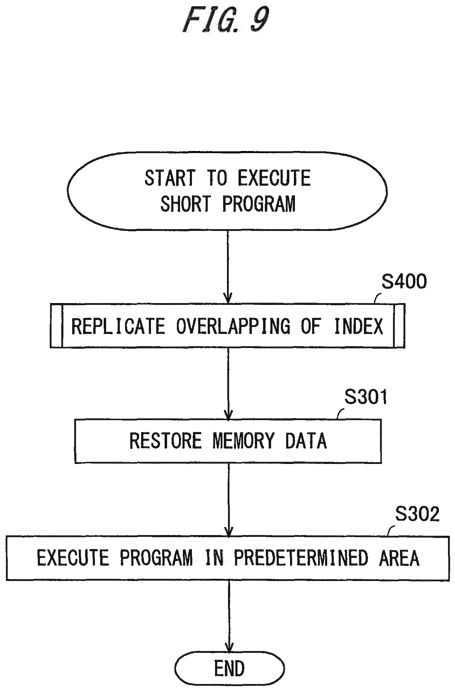

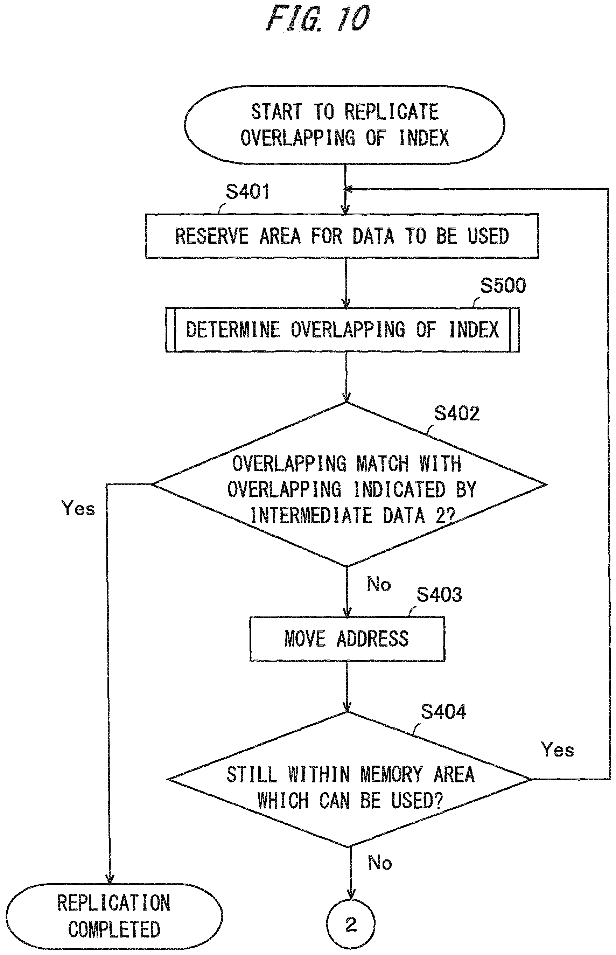

In S300, the CPU 10 executes the generated short program. FIG. 9 illustrates a flowchart of processes performed in S300. As illustrated in FIG. 9, the CPU 10 performs in S400 processes for replicating the overlapping of cache indexes regarding data used in the predetermined area of the program. FIG. 10 illustrates a flowchart of processes performed in S400. As illustrated in FIG. 10, the CPU 10 initiates the replication processes of the overlapping of cache indexes and reserves a data area for storing data used in the short program on the main memory 11 in S401. Here, saving the data area on the main memory 11 includes processes for arranging the address array in the program such as for requesting the OS for saving a memory area for the data. In addition, the CPU 10 selects two pieces of data as the targets for which the overlapping is determined. In the following descriptions, the two pieces of data is referred to as data A and data B. Next, the CPU proceeds with the process to S500.

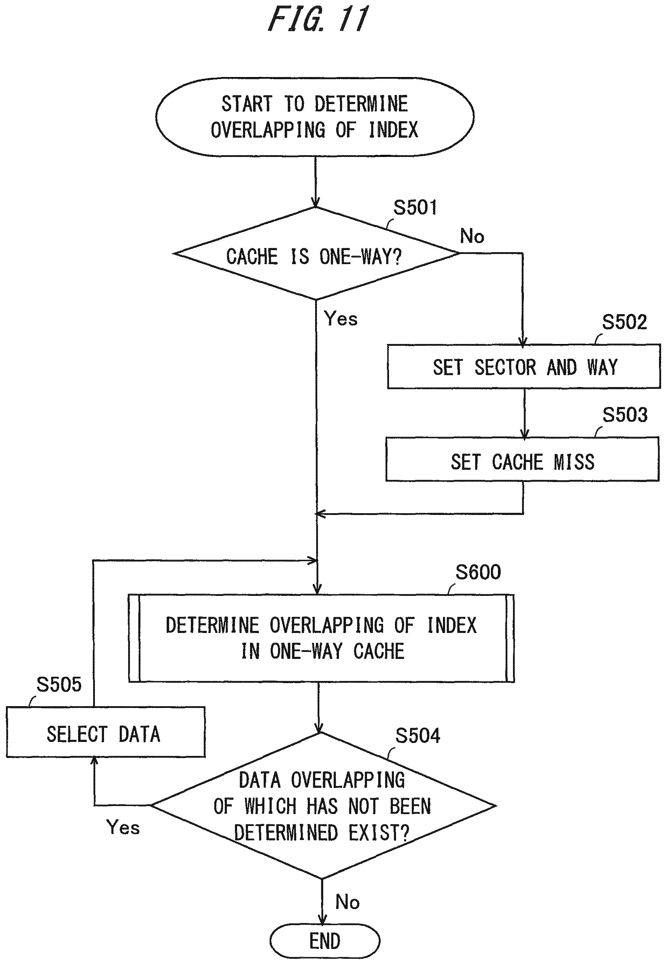

In S500, the CPU 10 performs the determination processes of the overlapping of the cache indexes. A flowchart of processes performed in S500 is illustrated in FIG. 11. As illustrated in FIG. 11, the CPU 10 determines at first in S501 whether or not the cache memory used for executing the short program is one-way cache memory. When the CPU 10 determines that the cache memory used for executing the short program is one-way cache memory (S501: Yes), the CPU 10 proceeds with the process to S600. In addition, when the CPU 10 determines that the cache memory used for executing the short program is not one-way cache memory, that is, the number of ways is equal to or more than 2 (S501: No), the CPU 10 proceeds with the process to S502.

In S502, the CPU 10 sets the number of ways of the sector 1 of the cache memory used for executing the short program and further designates the sector cache for data A and B as the sector 1. Next, the CPU 10 proceeds with the process to S503 and fills the cache memory with data stored in the sector 0. As a result, the cache memory is put under a situation in which a cache miss occurs regarding the data A and B. When the processes in S503 are completed, the CPU 10 proceeds with the process to S600.

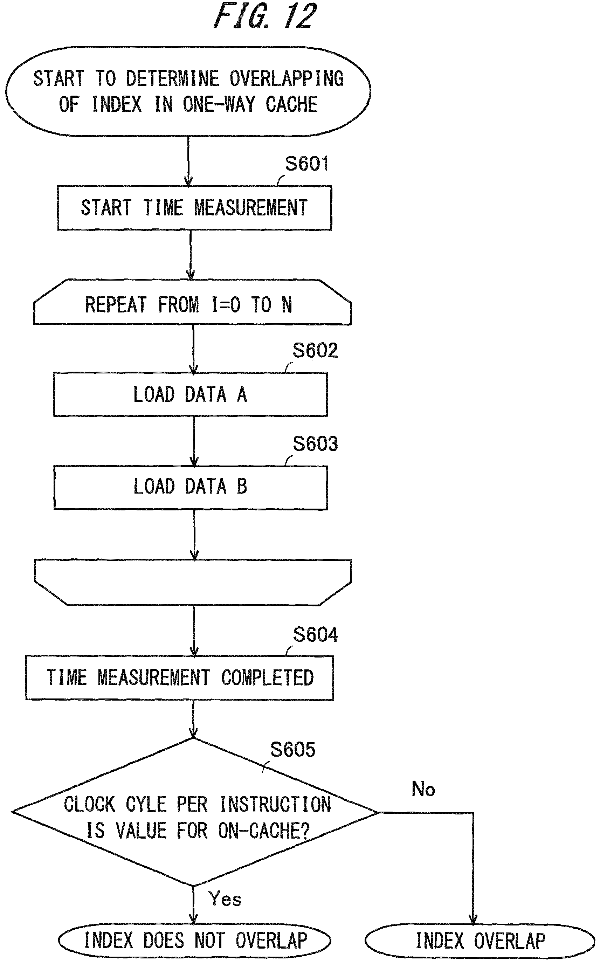

In S600, the CPU 10 performs processes for determining the overlapping of cache indexes in the cache memory with the number of ways set to 1. FIG. 12 illustrates a flowchart of processes performed in S600. First, the CPU 10 initiates the measurement of the time for performing the loop processes including S602 and S603. The CPU 10 performs the time measurement using conventional techniques such as CPU clock, system clock and real-time clock. Next, the CPU 10 performs the loop processes.

In the loop processes including S602 and S603, the CPU 10 alternately accesses data A and B in the cache memory. An access to data A leads to a cache miss since data stored in the sector 0 is stored in the cache memory as illustrated in FIG. 8A. And the CPU 10 acquires data A from the main memory 11 and stores the data A in the cache memory. Next, an access to data B also leads to a cache miss since the cache indexes of data A and B overlap each other. Thus, the CPU 10 acquires data B from the main memory 11 and stores the data B in the cache memory. Further, another access to data A leads to a cache miss again. Similarly, the alternate accesses to data A and B repeatedly lead to cache misses.

In addition, an access to data A leads to a cache miss at first similar to the example as illustrated in FIG. 8A, when the cache indexes of data A and B does not overlap as illustrated in FIG. 8B. And then an access to data B leads to a cache miss. However, since data A and B are stored in respective cache lines indicated by different cache indexes, subsequent accesses to data A and B lead to cache hit.

The CPU 10 acquires data which is an access target from the main memory 11 when a cache miss occurs. Therefore, The processing time of the CPU 10 in the case of cache miss becomes longer than the processing time in the case of cache hit. In the present embodiment, the CPU 10 proceeds with the process to S604 when the processes of S602 and S603 are performed N times. In S604, the CPU 10 terminates the time measurement process initiated in S601. And the CPU 10 proceeds with the process to S605 and uses the time obtained by the time measurement process in S604 to determine the clock cycles per instruction of the CPU 10 for loading data A and B in the loop processes including S602 and S603. Specifically, the CPU 10 determines whether or not the clock cycles per instruction correspond to the time within which loading data A and B can be performed on cache.

Performing loading data A and B on cache means that data A and B are kept being stored in the cache lines. It is noted that the determination process performed in S605 can be a process for determining whether or not the clock cycles per instruction of the CPU 10 correspond to predetermined time duration including the time within which loading data A and B on cache can be performed. In addition, it is noted that the time within which the on-cache process can be performed and the predetermined time duration correspond to an example of a predetermined threshold.

Therefore, when it is determined in S605 that the clock cycles per instruction of the CPU 10 correspond to the time within which the on-cache process can be performed (S605: Yes), the CPU 10 determines that the cache indexes of data A and B do not overlap. On the other hand, when it is determined in S605 that the clock cycles per instruction of the CPU 10 do not correspond to the time within which the on-cache process can be performed (S605: No), the CPU 10 determines that the cache indexes of data A and B overlap. The CPU 10 stores the determination results regarding the overlapping of the cache indexes of data A and B in the main memory 11 etc. It is noted that a determination result regarding the overlapping of the cache indexes of data A and B correspond to an example of information regarding the overlapping of cache indexes in a predetermined area of a program. When the processes of the flowchart as illustrated in FIG. 12 are completed, the CPU 10 proceeds with the process to S504 in FIG. 11.

In S504, the CPU 10 determines whether or not there is data to which the processes for determining the overlapping of the cache indexes as described above have not been performed among the data used in the predetermined area of the program. When there is data to which the processes for determining the overlapping of the cache indexes have not been performed (S504: Yes), the CPU 10 selects the data as a target data of the determination processes (S505) and returns the process to S600. On the other hand, when there is not data to which the processes for determining the overlapping of the cache indexes have not been performed (S504: No), the CPU proceeds with the process to S402 in FIG. 10.

In S402, the CPU 10 determines whether or not the determination result in S500 corresponds to the overlapping of the cache indexes indicated by the intermediate data 2 acquired in S103. When the overlapping of the cache indexes indicated by the determination result in S500 and indicated by the intermediate data 2 corresponds to each other (S402: Yes), it can be assumed that the execution of the short program can replicate the overlapping of cache indexes in the original program. In addition, the CPU 10 stores the arrangement of virtual addresses in the determination processes in S402 in the main memory 11 etc. Further, the CPU 10 proceeds with the process from S402 to S301. On the other hand, when the overlapping of the cache indexes indicated by the determination result in S500 and indicated by the intermediate data 2 does not correspond to each other (S402: No), the CPU 10 proceeds with the process from S402 to S403. It is noted that the process performed in S402 correspond to a process for determine the arrangement of a memory address when the overlapping of cache indexes of data used in the predetermined area of the program correspond to the overlapping of cache indexes indicated by information regarding the overlapping of the cache indexes when the program in the predetermined area of the program is executed. Although a virtual address is used as an example of a memory address in the present embodiment, a physical address can be used instead of the virtual address.

In S403, the CPU 10 maintains the address intervals of the virtual addresses arranged as illustrated in FIG. 7 and the CPU 10 moves the addresses of the memory area reserved in S401 for one cache line. It is noted that the minimum amount of movement of the addresses of the memory area is one cache line in S403 to ensure that the cache indexes of the data differ from each other. Next, the CPU 10 proceeds with the process to S404. In S404, the CPU 10 determines whether or not the addresses of the memory area moved in S403 are within the memory area which can be used when the short program is executed. When it is determined that the addresses of the memory area moved in S403 are within the memory area which can be used when the short program is executed (S404: Yes), the CPU 10 returns the process to S401. And the CPU 10 uses the addresses of the memory area moved in S403 to perform the processes subsequent to S500 again. On the other hand, it is determined that the addresses of the memory area moved in S403 are not within the memory area which can be used when the short program is executed (S404: No), the CPU 10 assumes that the overlapping of the cache indexes in the original program cannot be replicated when the short program is executed. And then the CPU 10 terminates the processes of the flowchart in the present embodiment.

In S301, the CPU 10 restores the intermediate data 2 acquired in S103 in the data area reserved in S401. As a result, the preparation of execution of the short program generated in S104 is completed. Next, the CPU 10 proceeds with the process to S302. In S302, the CPU 10 executes the short program generated in S104 using the values immediately before the execution of the program in the predetermined area which are included in the intermediate data 2 and the arrangement of virtual addresses which has been determined in S402 that the overlapping of the cache indexes can be replicated. As a result, the CPU 10 can preferably replicate the cache operations on the execution of the memory access instructions when the original program is executed by executing the short program using the intermediate data 2 to replicate the overlapping of the cache indexes. In addition, since the CPU 10 can replicate the overlapping of the cache indexes by using the intermediate data 2 in the short program, the CPU 10 can acquire the cache information on the execution of the original program without directly referring to the hardware in the operation processing apparatus 1. Further, the results obtained when the CPU 10 executes the short program can be used for tuning or optimizing the original program.

Although specific embodiments are described above, the configurations and the processes of the information processing apparatus as described and illustrated in the above embodiment can be arbitrarily modified and/or combined. A variation example of the above embodiment is described below. It is noted that the same reference number is given to elements corresponding to the elements in the above embodiment and the detailed descriptions for the elements are omitted in the following descriptions.

### <Variation Example>

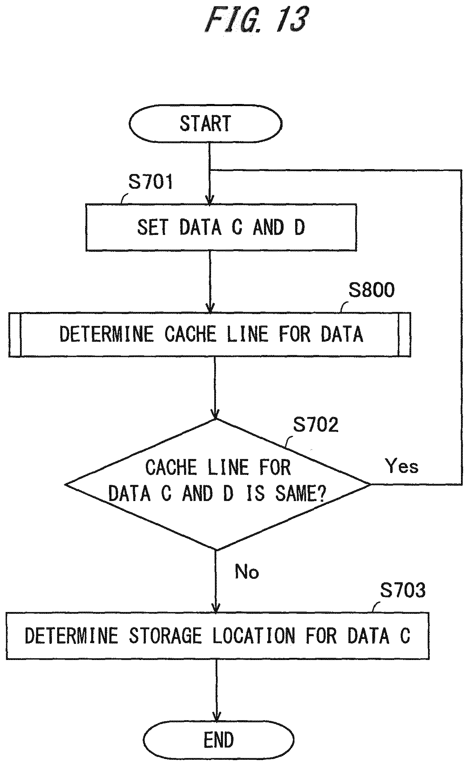

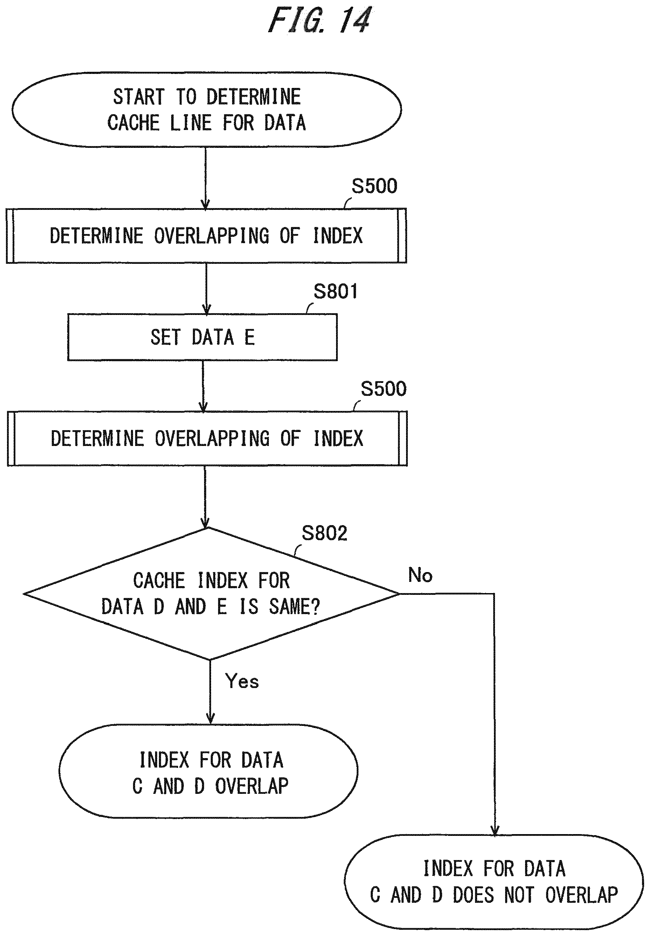

In the present variation example, a process is performed to determine the overlapping of cache lines for data used in S500 and to determine the locations to store the data on the cache lines. FIGS. 13 and 14 illustrate a flowchart of processes performed by the CPU 10 in the present variation example. In the variation example, the location to store data C on a cache line is determined.

In S701, the data 1 byte away from the data C on the physical memory is referred to as data D. When A[0] is, for example, referred to as data C in the case as illustrated in FIG. 5A, the data 1 byte away to the right from A[0] is data D. In the present variation example, when the CPU 10 returns the process to S701 after the process in S702 is performed, the data 1 byte away to the right from data D is newly referred to as data D. When the process in S701 is completed, the CPU 10 proceeds with the process to S800.

As illustrated in FIG. 14, the CPU 10 determines in S800 whether or not the data C and D have the same cache index. First, the CPU 10 performs the processes in S500 as described above to the data C and D. Since the processes in S500 are described above, the detailed descriptions of the processes are omitted here. When the processes in S500 are completed, the CPU 10 prepares data E in S801 which has the cache index same as the data C and does not belong to the cache lines used for the data C and D based on the results of the determinations performed in S500. Next, the CPU 10 proceeds with the process to S500. In S500 this time, the CPU 10 performs the processes in S500 as described above to the data D and E. Next, the CPU 10 proceeds with the process to S802.

In S802, the CPU 10 determines whether or not the cache indexes used for the data D and E overlap each other. When it is determined that the cache indexes used for the data D and E overlap each other (S802: Yes), the CPU 10 assumes that the cache indexes used for the data C and D overlap each other. On the other hand, when it is determined that the cache indexes used for the data D and E does not overlap each other (S802: No), the CPU 10 assumes that the cache indexes used for the data C and D does not overlap each other. Next, the CPU 10 proceeds with the process to S702. In a general cache mechanism, the cache indexes of two adjacent cache lines differ from each other. Therefore, when the cache indexes used for the data C and D overlap each other, it can be assumed that the data C and D are stored on the same cache line.

In S702, the CPU 10 determines based on the result of the processes in S802 whether or not the data C and D are stored on the same cache line. When the CPU 10 assumes that the data C and D are stored on the same cache line (S702: Yes), the CPU 10 returns the process to S701. On the other hand, when the CPU 10 does not assume that the data C and D are stored on the same cache line (S702: No), the CPU 10 proceeds with the process to S703.

With the processes performed as described above in the present example, since the processes in S701 and S702 are repeatedly performed while it is assumed that the data C and D are stored on the same cache line, the data D is separated from the data C at each step of one byte. And when it is assumed in S702 that the data C and D are not stored on the same cache line, it can be determined that the data D does not belong to the cache line on which the data C is stored. It is noted that the processes performed in S701 and S800 correspond to an example of a process for performing data acquisition of two pieces of data with one of the two pieces of data separated from the other at each step of the predetermined number of byte, and generating as information of the overlap of cache indexes in a predetermined area of a program information of the arrangement of one data and the other data on the cache memory when the data acquisition time determination unit determines that the time for the data acquisition is not larger than a predetermined threshold. With separating the data D from the data C at each step of one byte, the position of the data D relative to the data C can be determined. As a result, the location on the cache line at which the data C is stored can be determined.

In the present variation example, the sampling program is coordinated to output information of the location on the cache line at which the data C obtained by performing the processes as described above is stored as information included in the intermediate data 2 as described above. In addition, the CPU 10 can preferably replicate the cache operations according to the memory access instructions in the predetermined area of the original program by executing the short program using the intermediate data 2.

### «Computer Readable Recording Medium»

It is possible to record a program which causes a computer to implement any of the functions described above on a computer readable recording medium. In addition, by causing the computer to read in the program from the recording medium and execute it, the function thereof can be provided.

The computer readable recording medium mentioned herein indicates a recording medium which stores information such as data and a program by an electric, magnetic, optical, mechanical, or chemical operation and allows the stored information to be read from the computer. Of such recording media, those detachable from the computer include, e.g., a flexible disk, a magneto-optical disk, a CD-ROM, a CD-R/W, a DVD, a DAT, an 8-mm tape, and a memory card. Of such recording media, those fixed to the computer include a hard disk and a ROM (Read Only Memory).

The technique disclosed according to the embodiment can provide an operation processing apparatus for preferably replicating a process in a predetermined area of a program without reference to hardware.

## Claims

1. An operation processing apparatus, comprising:
an acquisition unit configured to acquire a program corresponding to a predetermined area of an original program;
a generation unit configured to generate a sampling program, for acquiring data to replicate cache operation in the predetermined area, and to generate data used in the predetermined area immediately before the program corresponding to the predetermined area is executed and information of overlapping of cache index for the data in the predetermined area in a case in which cache memory used for executing the original program operates as one-way cache memory; and
an execution unit configured to execute the program corresponding to the predetermined area using the generated data immediately before the program corresponding to the predetermined area is executed and the information of the overlapping of the cache index.

2. The operation processing apparatus according to claim 1, wherein the execution unit is configured to determine an allocation of a memory address with which the overlapping of cache index for each data used in the predetermined area matches with the overlapping of cache index indicated by the information of overlapping of cache index for the data in the predetermined area, and the executing executes the program corresponding to the predetermined area using the data used in the predetermined area immediately before the program corresponding to the predetermined area is executed and the determined allocation of the memory address.

3. The operation processing apparatus according to claim 1 or 2, further comprising:
a data processing unit configured to execute data acquisition to alternately acquire each of two pieces of data used in the predetermined area; and
a data acquisition time determination unit configured to determine whether or not time used to acquire each of the two pieces of data exceed a predetermined threshold,
wherein the generation unit is configured to generate information indicating that the cache indexes for the two pieces of data overlap in the predetermined area as the information of the overlapping of cache index for the data in the predetermined area when it is determined that the time used to acquire each of the two pieces of data exceeds the predetermined threshold.

4. The operation processing apparatus according to claim 3, wherein when it is determined that the time used to acquire each of the two pieces of data exceeds the predetermined threshold, the data processing unit is configured to execute the data acquisition with separating one of the two pieces of data from the other of the two pieces of data at each step of a predetermined byte on main memory used for executing the original program, and
the generation unit is configured to generate information of allocation of the two pieces of data on the main memory as the information of the overlapping of cache index for the data in the predetermined area when it is determined that the time used to acquire each of the two pieces of data does not exceed the predetermined threshold.

5. The operation processing apparatus according to any of claims 1 to 4, further comprising:
a cache setting unit configured to set, when the number of ways of the cache memory used for executing the original program is equal to or more than two and the cache memory is divided into a plurality of sectors, the number of ways to one, set a sector to store the data used in the predetermined area as a first sector and set a sector to store data which is not used in the predetermined area as a second sector.

6. An operation processing method, comprising:
acquiring a program corresponding to a predetermined area of an original program;
generating a sampling program, for acquiring data to replicate cache operation in the predetermined area, and generating data used in the predetermined area immediately before the program corresponding to the predetermined area is executed and information of overlapping of cache index for the data in the predetermined area in a case in which cache memory used for executing the original program operates as one-way cache memory; and
executing the program corresponding to the predetermined area using the generated data immediately before the program corresponding to the predetermined area is executed and the information of the overlapping of the cache index.

7. The operation processing method according to claim 6, wherein the executing determines an allocation of a memory address with which the overlapping of cache index for each data used in the predetermined area matches with the overlapping of cache index indicated by the information of overlapping of cache index for the data in the predetermined area, and the executing executes the program corresponding to the predetermined area using the data used in the predetermined area immediately before the program corresponding to the predetermined area is executed and the determined allocation of the memory address.

8. The operation processing method according to claim 6 or 7, further comprising:
executing data acquisition to alternately acquire each of two pieces of data used in the predetermined area; and
determining whether or not time used to acquire each of the two pieces of data exceed a predetermined threshold,
wherein information indicating that the cache indexes for the two pieces of data overlap in the predetermined area is generated as the information of the overlapping of cache index for the data in the predetermined area when it is determined that the time used to acquire each of the two pieces of data exceeds the predetermined threshold.

9. The operation processing method according to claim 8, wherein when it is determined that the time used to acquire each of the two pieces of data exceeds the predetermined threshold, the data acquisition is executed with separating one of the two pieces of data from the other of the two pieces of data at each step of a predetermined byte on main memory used for executing the original program, and
information of allocation of the two pieces of data on the main memory is generated as the information of the overlapping of cache index for the data in the predetermined area when it is determined that the time used to acquire each of the two pieces of data does not exceed the predetermined threshold.

10. The operation processing method according to any of claims 6 to 9, further comprising:
setting when the number of ways of the cache memory used for executing the original program is equal to or more than two and the cache memory is divided into a plurality of sectors, the number of ways to one, setting a sector to store the data used in the predetermined area as a first sector and setting a sector to store data which is not used in the predetermined area as a second sector.

11. An operation processing program, comprising:
acquiring a program corresponding to a predetermined area of an original program;
generating a sampling program, for acquiring data to replicate cache operation in the predetermined area, and generating data used in the predetermined area immediately before the program corresponding to the predetermined area is executed and information of overlapping of cache index for the data in the predetermined area in a case in which cache memory used for executing the original program operates as one-way cache memory; and
executing the program corresponding to the predetermined area using the generated data immediately before the program corresponding to the predetermined area is executed and the information of the overlapping of the cache index.

12. The operation processing program according to claim 11, wherein the executing determines an allocation of a memory address with which the overlapping of cache index for each data used in the predetermined area matches with the overlapping of cache index indicated by the information of overlapping of cache index for the data in the predetermined area, and the executing executes the program corresponding to the predetermined area using the data used in the predetermined area immediately before the program corresponding to the predetermined area is executed and the determined allocation of the memory address.

13. The operation processing program according to claim 11 or 12, wherein the process further comprises:
executing data acquisition to alternately acquire each of two pieces of data used in the predetermined area; and
determining whether or not time used to acquire each of the two pieces of data exceed a predetermined threshold,
wherein information indicating that the cache indexes for the two pieces of data overlap in the predetermined area is generated as the information of the overlapping of cache index for the data in the predetermined area when it is determined that the time used to acquire each of the two pieces of data exceeds the predetermined threshold.

14. The operation processing program according to claim 13, wherein when it is determined that the time used to acquire each of the two pieces of data exceeds the predetermined threshold, the data acquisition is executed with separating one of the two pieces of data from the other of the two pieces of data at each step of a predetermined byte on main memory used for executing the original program, and
information of allocation of the two pieces of data on the main memory is generated as the information of the overlapping of cache index for the data in the predetermined area when it is determined that the time used to acquire each of the two pieces of data does not exceed the predetermined threshold.

15. The operation processing program according to any of claims 11 to 14, wherein the process further comprises:
setting when the number of ways of the cache memory used for executing the original program is equal to or more than two and the cache memory is divided into a plurality of sectors, the number of ways to one, setting a sector to store the data used in the predetermined area as a first sector and setting a sector to store data which is not used in the predetermined area as a second sector.

## Patentansprüche

1. Operationsverarbeitungsvorrichtung, Folgendes umfassend:
eine Erfassungseinheit, welche konfiguriert ist, ein Programm entsprechend einem vorgegebenen Bereich eines ursprünglichen Programms zu erfassen;
eine Erzeugungseinheit, welche konfiguriert ist, ein Abtastprogramm zum Erfassen von Daten zum Replizieren einer Cache-Operation in dem vorgegebenen Bereich zu erzeugen und Daten, welche in dem vorgegebenen Bereich verwendet werden, unmittelbar bevor das Programm entsprechend dem vorgegebenen Bereich ausgeführt wird, und Informationen eines Überlappens eines Cache-Indexes für die Daten in dem vorgegebenen Bereich in einem Fall zu erzeugen, in welchem Cache-Speicher, welcher zum Ausführen des ursprünglichen Programms verwendet wird, als ein Einweg-Cache-Speicher arbeitet; und
eine Ausführungseinheit, welche konfiguriert ist, das Programm entsprechend dem vorgegebenen Bereich unter Verwendung der erzeugten Daten, unmittelbar bevor das Programm entsprechend dem vorgegebenen Bereich ausgeführt wird, und der Informationen des Überlappens des Cache-Indexes auszuführen.

2. Operationsverarbeitungsvorrichtung nach Anspruch 1, wobei die Ausführungseinheit konfiguriert ist, eine Zuteilung einer Speicheradresse festzulegen, mit welcher das Überlappen des Cache-Indexes für alle jeweiligen Daten, welche in dem vorgegebenen Bereich verwendet werden, mit dem Überlappen des Cache-Indexes übereinstimmt, was durch die Informationen des Überlappens des Cache-Indexes für die Daten in dem vorgegebenen Bereich angegeben wird, und das Ausführen das Programm entsprechend dem vorgegebenen Bereich unter Verwendung der Daten, welche in dem vorgegebenen Bereich verwendet werden, unmittelbar bevor das Programm entsprechend dem vorgegebenen Bereich ausgeführt wird, und der festgelegten Zuteilung der Speicheradresse ausführt.

3. Operationsverarbeitungsvorrichtung nach Anspruch 1 oder 2, weiterhin Folgendes umfassend:
eine Datenverarbeitungseinheit, welche konfiguriert ist, eine Datenerfassung auszuführen, um jedes von zwei Datenstücken alternierend zu erfassen, welche in dem vorgegebenen Bereich verwendet werden; und
eine Datenerfassungszeit-Bestimmungseinheit, welche konfiguriert ist, festzustellen, ob eine Zeit, welche verwendet wird, um jedes der beiden Datenstücke zu erfassen, eine vorgegebene Schwelle übersteigt oder nicht,
wobei die Erzeugungseinheit konfiguriert ist, Informationen, welche angeben, dass die Cache-Indices für die beiden Datenstücke in dem vorgegebenen Bereich überlappen, als die Informationen des Überlappens des Cache-Indexes für die Daten in dem vorgegebenen Bereich zu erzeugen, wenn festgestellt wird, dass die Zeit, welche verwendet wird, um jedes der beiden Datenstücke zu erfassen, die vorgegebene Schwelle überschreitet.

4. Operationsverarbeitungsvorrichtung nach Anspruch 3, wobei, wenn festgestellt wird, dass die Zeit, welche verwendet wird, um jedes der beiden Datenstücke zu erfassen, die vorgegebene Schwelle überschreitet, die Datenverarbeitungseinheit konfiguriert ist, die Datenerfassung mit Trennen eines der beiden Datenstücke von dem anderen der beiden Datenstücke bei jedem Schritt eines vorgegebenen Bytes im Hauptspeicher auszuführen, welcher zum Ausführen des ursprünglichen Programms verwendet wird, und
die Erzeugungseinheit konfiguriert ist, Informationen der Zuteilung der beiden Datenstücke im Hauptspeicher als die Informationen des Überlappens des Cache-Indexes für die Daten in dem vorgegebenen Bereich zu erzeugen, wenn festgestellt wird, dass die Zeit, welche verwendet wird, um jedes der beiden Datenstücke zu erfassen, die vorgegebene Schwelle nicht überschreitet.

5. Operationsverarbeitungsvorrichtung nach einem der Ansprüche 1 bis 4, weiterhin Folgendes umfassend:
eine Cache-Einstelleinheit, welche konfiguriert ist, wenn die Anzahl Wege, auf welchen der Cache-Speicher zum Ausführen des ursprünglichen Programms verwendet wird, größer oder gleich zwei ist und der Cache-Speicher in mehrere Sektoren aufgeteilt ist, die Anzahl Wege auf eins einzustellen, einen Sektor zum Speichern der Daten, welche in dem vorgegebenen Bereich verwendet werden, als einen ersten Sektor einzustellen und einen Sektor zum Speichern der Daten, welche nicht in dem vorgegebenen Bereich verwendet werden, als einen zweiten Sektor einzustellen.

6. Operationsverarbeitungsverfahren, Folgendes umfassend:
Erfassen eines Programms entsprechend einem vorgegebenen Bereich eines ursprünglichen Programms;
Erzeugen eines Abtastprogramms zum Erfassen von Daten zum Replizieren einer Cache-Operation in dem vorgegebenen Bereich und Erzeugen von Daten, welche in dem vorgegebenen Bereich verwendet werden, unmittelbar bevor das Programm entsprechend dem vorgegebenen Bereich ausgeführt wird, und Informationen eines Überlappens eines Cache-Indexes für die Daten in dem vorgegebenen Bereich in einem Fall, in welchem Cache-Speicher, welcher zum Ausführen des ursprünglichen Programms verwendet wird, als ein Einweg-Cache-Speicher arbeitet; und
Ausführen des Programms entsprechend dem vorgegebenen Bereich unter Verwendung der erzeugten Daten, unmittelbar bevor das Programm entsprechend dem vorgegebenen Bereich ausgeführt wird, und der Informationen des Überlappens des Cache-Indexes.

7. Operationsverarbeitungsverfahren nach Anspruch 6, wobei das Ausführen eine Zuteilung einer Speicheradresse festlegt, mit welcher das Überlappen des Cache-Indexes für alle jeweiligen Daten, welche in dem vorgegebenen Bereich verwendet werden, mit dem Überlappen des Cache-Indexes übereinstimmt, was durch die Informationen des Überlappens des Cache-Indexes für die Daten in dem vorgegebenen Bereich angegeben wird, und das Ausführen das Programm entsprechend dem vorgegebenen Bereich unter Verwendung der Daten, welche in dem vorgegebenen Bereich verwendet werden, unmittelbar bevor das Programm entsprechend dem vorgegebenen Bereich ausgeführt wird, und der festgelegten Zuteilung der Speicheradresse ausführt.

8. Operationsverarbeitungsverfahren nach Anspruch 6 oder 7, weiterhin Folgendes umfassend:
Ausführen einer Datenerfassung, um jedes von zwei Datenstücken alternierend zu erfassen, welche in dem vorgegebenen Bereich verwendet werden; und
Feststellen, ob eine Zeit, welche verwendet wird, um jedes der beiden Datenstücke zu erfassen, eine vorgegebene Schwelle übersteigt oder nicht,
wobei Informationen, welche angeben, dass die Cache-Indices für die beiden Datenstücke in dem vorgegebenen Bereich überlappen, als die Informationen des Überlappens des Cache-Indexes für die Daten in dem vorgegebenen Bereich erzeugt werden, wenn festgestellt wird, dass die Zeit, welche verwendet wird, um jedes der beiden Datenstücke zu erfassen, die vorgegebene Schwelle überschreitet.

9. Operationsverarbeitungsverfahren nach Anspruch 8, wobei, wenn festgestellt wird, dass die Zeit, welche verwendet wird, um jedes der beiden Datenstücke zu erfassen, die vorgegebene Schwelle überschreitet, die Datenerfassung mit Trennen eines der beiden Datenstücke von dem anderen der beiden Datenstücke bei jedem Schritt eines vorgegebenen Bytes im Hauptspeicher ausgeführt wird, welcher zum Ausführen des ursprünglichen Programms verwendet wird, und
Informationen der Zuteilung der beiden Datenstücke im Hauptspeicher als die Informationen des Überlappens des Cache-Indexes für die Daten in dem vorgegebenen Bereich erzeugt werden, wenn festgestellt wird, dass die Zeit, welche verwendet wird, um jedes der beiden Datenstücke zu erfassen, die vorgegebene Schwelle nicht überschreitet.

10. Operationsverarbeitungsverfahren nach einem der Ansprüche 6 bis 9, weiterhin Folgendes umfassend:
Einstellen, wenn die Anzahl Wege, auf welchen der Cache-Speicher zum Ausführen des ursprünglichen Programms verwendet wird, größer oder gleich zwei ist und der Cache-Speicher in mehrere Sektoren aufgeteilt ist, der Anzahl Wege auf eins, Einstellen eines Sektors zum Speichern der Daten, welche in dem vorgegebenen Bereich verwendet werden, als einen ersten Sektor und Einstellen eines Sektors zum Speichern der Daten, welche nicht in dem vorgegebenen Bereich verwendet werden, als einen zweiten Sektor.

11. Operationsverarbeitungsprogramm, Folgendes umfassend:
Erfassen eines Programms entsprechend einem vorgegebenen Bereich eines ursprünglichen Programms;
Erzeugen eines Abtastprogramms zum Erfassen von Daten zum Replizieren einer Cache-Operation in dem vorgegebenen Bereich und Erzeugen von Daten, welche in dem vorgegebenen Bereich verwendet werden, unmittelbar bevor das Programm entsprechend dem vorgegebenen Bereich ausgeführt wird, und Informationen eines Überlappens eines Cache-Indexes für die Daten in dem vorgegebenen Bereich in einem Fall, in welchem Cache-Speicher, welcher zum Ausführen des ursprünglichen Programms verwendet wird, als ein Einweg-Cache-Speicher arbeitet; und
Ausführen des Programms entsprechend dem vorgegebenen Bereich unter Verwendung der erzeugten Daten, unmittelbar bevor das Programm entsprechend dem vorgegebenen Bereich ausgeführt wird, und der Informationen des Überlappens des Cache-Indexes.

12. Operationsverarbeitungsprogramm nach Anspruch 11, wobei das Ausführen eine Zuteilung einer Speicheradresse festlegt, mit welcher das Überlappen des Cache-Indexes für alle jeweiligen Daten, welche in dem vorgegebenen Bereich verwendet werden, mit dem Überlappen des Cache-Indexes übereinstimmt, was durch die Informationen des Überlappens des Cache-Indexes für die Daten in dem vorgegebenen Bereich angegeben wird, und das Ausführen das Programm entsprechend dem vorgegebenen Bereich unter Verwendung der Daten, welche in dem vorgegebenen Bereich verwendet werden, unmittelbar bevor das Programm entsprechend dem vorgegebenen Bereich ausgeführt wird, und der festgelegten Zuteilung der Speicheradresse ausführt.

13. Operationsverarbeitungsprogramm nach Anspruch 11 oder 12, wobei der Prozess weiterhin Folgendes umfasst:
Ausführen einer Datenerfassung, um jedes von zwei Datenstücken alternierend zu erfassen, welche in dem vorgegebenen Bereich verwendet werden; und
Feststellen, ob eine Zeit, welche verwendet wird, um jedes der beiden Datenstücke zu erfassen, eine vorgegebene Schwelle übersteigt oder nicht,
wobei Informationen, welche angeben, dass die Cache-Indices für die beiden Datenstücke in dem vorgegebenen Bereich überlappen, als die Informationen des Überlappens des Cache-Indexes für die Daten in dem vorgegebenen Bereich erzeugt werden, wenn festgestellt wird, dass die Zeit, welche verwendet wird, um jedes der beiden Datenstücke zu erfassen, die vorgegebene Schwelle überschreitet.

14. Operationsverarbeitungsprogramm nach Anspruch 13, wobei, wenn festgestellt wird, dass die Zeit, welche verwendet wird, um jedes der beiden Datenstücke zu erfassen, die vorgegebene Schwelle überschreitet, die Datenerfassung mit Trennen eines der beiden Datenstücke von dem anderen der beiden Datenstücke bei jedem Schritt eines vorgegebenen Bytes im Hauptspeicher ausgeführt wird, welcher zum Ausführen des ursprünglichen Programms verwendet wird, und
Informationen der Zuteilung der beiden Datenstücke im Hauptspeicher als die Informationen des Überlappens des Cache-Indexes für die Daten in dem vorgegebenen Bereich erzeugt werden, wenn festgestellt wird, dass die Zeit, welche verwendet wird, um jedes der beiden Datenstücke zu erfassen, die vorgegebene Schwelle nicht überschreitet.

15. Operationsverarbeitungsprogramm nach einem der Ansprüche 11 bis 14, wobei der Prozess weiterhin Folgendes umfasst:
Einstellen, wenn die Anzahl Wege, auf welchen der Cache-Speicher zum Ausführen des ursprünglichen Programms verwendet wird, größer oder gleich zwei ist und der Cache-Speicher in mehrere Sektoren aufgeteilt ist, der Anzahl Wege auf eins, Einstellen eines Sektors zum Speichern der Daten, welche in dem vorgegebenen Bereich verwendet werden, als einen ersten Sektor und Einstellen eines Sektors zum Speichern der Daten, welche nicht in dem vorgegebenen Bereich verwendet werden, als einen zweiten Sektor.

## Revendications

1. Appareil de traitement d'opération, comprenant :
une unité d'acquisition configurée pour acquérir un programme correspondant à une zone prédéterminée d'un programme d'origine ;
une unité de génération configurée pour générer un programme d'échantillonnage, pour acquérir des données pour dupliquer une opération de mémoire cache dans la zone prédéterminée, et pour générer des données utilisées dans la zone prédéterminée immédiatement avant que le programme correspondant à la zone prédéterminée soit exécuté et des informations de superposition d'index de mémoire cache pour les données dans la zone prédéterminée dans un cas dans lequel la mémoire cache utilisée pour exécuter le programme d'origine fonctionne en tant que mémoire cache unidirectionnelle ; et
une unité d'exécution configurée pour exécuter le programme correspondant à la zone prédéterminée en utilisant les données générées immédiatement avant que le programme correspondant à la zone prédéterminée soit exécuté et les informations de la superposition de l'index de mémoire cache.

2. Appareil de traitement d'opération selon la revendication 1, dans lequel l'unité d'exécution est configurée pour déterminer une attribution d'une adresse de mémoire avec laquelle la superposition d'index de mémoire cache pour chacune des données utilisées dans la zone prédéterminée correspond à la superposition d'index de mémoire cache indiquée par les informations de superposition d'index de mémoire cache pour les données dans la zone prédéterminée, et l'exécution exécute le programme correspondant à la zone prédéterminée en utilisant les données utilisées dans la zone prédéterminée immédiatement avant que le programme correspondant à la zone prédéterminée soit exécuté et l'attribution déterminée de l'adresse de mémoire.

3. Appareil de traitement d'opération selon la revendication 1 ou 2, comprenant en outre :
une unité de traitement de données configurée pour exécuter une acquisition de données pour acquérir alternativement chacun de deux éléments de données utilisés dans la zone prédéterminée ; et
une unité de détermination de temps d'acquisition de données configurée pour déterminer si, oui ou non, le temps utilisé pour acquérir chacun des deux éléments de données dépasse un seuil prédéterminé,
dans lequel l'unité de génération est configurée pour générer des informations indiquant que les index de mémoire cache pour les deux éléments de données se superposent dans la zone prédéterminée en tant qu'informations de la superposition d'index de mémoire cache pour les données dans la zone prédéterminée lorsqu'il est déterminé que le temps utilisé pour acquérir chacun des deux éléments de données dépasse le seuil prédéterminé.

4. Appareil de traitement d'opération selon la revendication 3, dans lequel, lorsqu'il est déterminé que le temps utilisé pour acquérir chacun des deux éléments de données dépasse le seuil prédéterminé, l'unité de traitement de données est configurée pour exécuter l'acquisition de données en séparant l'un des deux éléments de données de l'autre des deux éléments de données à chaque étape d'un octet prédéterminé dans la mémoire principale utilisée pour exécuter le programme d'origine, et
l'unité de génération est configurée pour générer les informations d'attribution des deux éléments de données dans la mémoire principale en tant qu'informations de la superposition d'index de mémoire cache pour les données dans la zone prédéterminée lorsqu'il est déterminé que le temps utilisé pour acquérir chacun des deux éléments de données ne dépasse pas le seuil prédéterminé.

5. Appareil de traitement d'opération selon l'une quelconque des revendications 1 à 4, comprenant en outre :
une unité de paramétrage de mémoire cache configurée pour établir, lorsque le nombre de directions de la mémoire cache utilisée pour exécuter le programme d'origine est supérieur ou égal à deux et que la mémoire cache est divisée en une pluralité de secteurs, le nombre de directions à un, établir un secteur pour mémoriser les données utilisées dans la zone prédéterminée en tant que premier secteur et établir un secteur pour mémoriser les données qui ne sont pas utilisées dans la zone prédéterminée en tant que deuxième secteur.

6. Procédé de traitement d'opération, comprenant :
l'acquisition d'un programme correspondant à une zone prédéterminée d'un programme d'origine ;
la génération d'un programme d'échantillonnage, pour acquérir des données pour dupliquer une opération de mémoire cache dans la zone prédéterminée, et la génération de données utilisées dans la zone prédéterminée immédiatement avant que le programme correspondant à la zone prédéterminée soit exécuté et d'informations de superposition d'index de mémoire cache pour les données dans la zone prédéterminée dans un cas dans lequel la mémoire cache utilisée pour exécuter le programme d'origine fonctionne en tant que mémoire cache unidirectionnelle ; et
l'exécution du programme correspondant à la zone prédéterminée en utilisant les données générées immédiatement avant que le programme correspondant à la zone prédéterminée soit exécuté et les informations de la superposition de l'index de mémoire cache.

7. Procédé de traitement d'opération selon la revendication 6, dans lequel l'exécution détermine une attribution d'une adresse de mémoire avec laquelle la superposition d'index de mémoire cache pour chacune des données utilisées dans la zone prédéterminée correspond à la superposition d'index de mémoire cache indiquée par les informations de superposition d'index de mémoire cache pour les données dans la zone prédéterminée, et l'exécution exécute le programme correspondant à la zone prédéterminée en utilisant les données utilisées dans la zone prédéterminée immédiatement avant que le programme correspondant à la zone prédéterminée soit exécuté et l'attribution déterminée de l'adresse de mémoire.

8. Procédé de traitement d'opération selon la revendication 6 ou 7, comprenant en outre :
l'exécution de l'acquisition de données pour acquérir alternativement chacun de deux éléments de données utilisés dans la zone prédéterminée ; et
la détermination si, oui ou non, le temps utilisé pour acquérir chacun des deux éléments de données dépasse un seuil prédéterminé,
dans lequel des informations indiquant que les index de mémoire cache pour les deux éléments de données se superposent dans la zone prédéterminée sont générées en tant qu'informations de la superposition d'index de mémoire cache pour les données dans la zone prédéterminée lorsqu'il est déterminé que le temps utilisé pour acquérir chacun des deux éléments de données dépasse le seuil prédéterminé.

9. Procédé de traitement d'opération selon la revendication 8, dans lequel, lorsqu'il est déterminé que le temps utilisé pour acquérir chacun des deux éléments de données dépasse le seuil prédéterminé, l'acquisition de données est exécutée en séparant un des deux éléments de données de l'autre des deux éléments de données à chaque étape d'un octet prédéterminé dans la mémoire principale utilisée pour exécuter le programme d'origine, et
les informations d'attribution des deux éléments de données dans la mémoire principale sont générées en tant qu'informations de la superposition d'index de mémoire cache pour les données dans la zone prédéterminée lorsqu'il est déterminé que le temps utilisé pour acquérir chacun des deux éléments de données ne dépasse pas le seuil prédéterminé.

10. Procédé de traitement d'opération selon l'une quelconque des revendications 6 à 9, comprenant en outre :
l'établissement, lorsque le nombre de directions de la mémoire cache utilisée pour exécuter le programme d'origine est supérieur ou égal à deux et que la mémoire cache est divisée en une pluralité de secteurs, du nombre de directions à un, l'établissement d'un secteur pour mémoriser les données utilisées dans la zone prédéterminée en tant que premier secteur et l'établissement d'un secteur pour mémoriser les données qui ne sont pas utilisées dans la zone prédéterminée en tant que deuxième secteur.

11. Programme de traitement d'opération, comprenant :
l'acquisition d'un programme correspondant à une zone prédéterminée d'un programme d'origine ;
la génération d'un programme d'échantillonnage, pour acquérir des données pour dupliquer une opération de mémoire cache dans la zone prédéterminée, et la génération de données utilisées dans la zone prédéterminée immédiatement avant que le programme correspondant à la zone prédéterminée soit exécuté et d'informations de superposition d'index de mémoire cache pour les données dans la zone prédéterminée dans un cas dans lequel la mémoire cache utilisée pour exécuter le programme d'origine fonctionne en tant que mémoire cache unidirectionnelle ; et
l'exécution du programme correspondant à la zone prédéterminée en utilisant les données générées immédiatement avant que le programme correspondant à la zone prédéterminée soit exécuté et les informations de la superposition de l'index de mémoire cache.

12. Programme de traitement d'opération selon la revendication 11, dans lequel l'exécution détermine une attribution d'une adresse de mémoire avec laquelle la superposition d'index de mémoire cache pour chacune des données utilisées dans la zone prédéterminée correspond à la superposition d'index de mémoire cache indiquée par les informations de superposition d'index de mémoire cache pour les données dans la zone prédéterminée, et l'exécution exécute le programme correspondant à la zone prédéterminée en utilisant les données utilisées dans la zone prédéterminée immédiatement avant que le programme correspondant à la zone prédéterminée soit exécuté et l'attribution déterminée de l'adresse de mémoire.

13. Programme de traitement d'opération selon la revendication 11 ou 12, dans lequel le processus comprend en outre :
l'exécution de l'acquisition de données pour acquérir alternativement chacun de deux éléments de données utilisés dans la zone prédéterminée ; et
la détermination si, oui ou non, le temps utilisé pour acquérir chacun des deux éléments de données dépasse un seuil prédéterminé,
dans lequel les informations indiquant que les index de mémoire cache pour les deux éléments de données se superposent dans la zone prédéterminée sont générées en tant qu'informations de la superposition d'index de mémoire cache pour les données dans la zone prédéterminée lorsqu'il est déterminé que le temps utilisé pour acquérir chacun des deux éléments de données dépasse le seuil prédéterminé.

14. Programme de traitement d'opération selon la revendication 13, dans lequel, lorsqu'il est déterminé que le temps utilisé pour acquérir chacun des deux éléments de données dépasse le seuil prédéterminé, l'acquisition de données est exécutée en séparant un des deux éléments de données de l'autre des deux éléments de données à chaque étape d'un octet prédéterminé dans la mémoire principale utilisée pour exécuter le programme d'origine, et
des informations d'attribution des deux éléments de données dans la mémoire principale sont générées en tant qu'informations de la superposition d'index de mémoire cache pour les données dans la zone prédéterminée lorsqu'il est déterminé que le temps utilisé pour acquérir chacun des deux éléments de données ne dépasse pas le seuil prédéterminé.

15. Programme de traitement d'opération selon l'une quelconque des revendications 11 à 14, dans lequel le processus comprend en outre :
l'établissement, lorsque le nombre de directions de la mémoire cache utilisée pour exécuter le programme d'origine est supérieur ou égal à deux et que la mémoire cache est divisée en une pluralité de secteurs, du nombre de directions à un, l'établissement d'un secteur pour mémoriser les données utilisées dans la zone prédéterminée en tant que premier secteur et l'établissement d'un secteur pour mémoriser les données qui ne sont pas utilisées dans la zone prédéterminée en tant que deuxième secteur.
